# EUROPÄISCHE PATENTSCHRIFT

(11) **EP 0 450 185 B1**
(45) Veröffentlichungstag und Bekanntmachung des Hinweises auf die Patenterteilung: **04.08.1993**
(21) Anmeldenummer: 90125165.2
(22) Anmeldetag: 21.12.1990
(51) Int. Cl.: F23Q 7/00

(54) **Flammglühkerze für eine luftverdichtende Einspritzbrennkraftmachine, insb. direkteinspritzende und ladedruckbeaufschlagbare Brennkraftmaschine**
Flame glowplug for an injected air compressing combustion engine, in particular for a direct injection and supercharging engine
Bougie à flamme pour un moteur à combustion à injection et compression d'air, en particulier pour moteur à injection directe et à surcompression

(30) Priorität: 08.03.1990 DE 4007340
(43) Veröffentlichungstag der Anmeldung: 09.10.1991
(73) Patentinhaber: MERCEDES-BENZ AG, 70327 Stuttgart (DE)
(72) Erfinder: Schmid, Friedrich, W-7054 Korb (DE); Joppig, Peter, W-7054 Korb 2 (DE); Klak, Roland, W-7302 Ostfildern 1 (DE)

(56) Entgegenhaltungen:
- DE-A- 1 576 652
- FR-A- 1 577 731

## Beschreibung

Die Erfindung betrifft eine Flammglühkerze für eine luftverdichtende Einspritzbrennkraftmaschine, insbesondere direkteinspritzende und ladedruckbeaufschlagbare Brennkraftmaschine, nach den im Oberbegriff des Patentanspruchs angegebenen Merkmalen.

Flammglühkerzen dienen als Kaltstarthilfe und machen als Vorglühanlage den Dieselkraftstoff zündwilliger. Sie werden in Abhängigkeit von der Temperatur der Brennkraftmaschine, z.B. <0°C, vor dem Start vorgeheizt, denn in der Startphase würde bei kalter Brennkraftmaschine und niedriger Außentemperatur die bei der hohen Verdichtung entstandene Wärme nicht ausreichen, den Kraftstoff zu entzünden. Die Folge wären lästige Mengen von unverbranntem Kraftstoffgemisch und ein hoher Ausstoß an Ruß.

Aus der Druckschrift "BERU aktuell", Mai 1987, Ausgabe 11, Seite IX, ist eine Flammglühkerze bekannt, bei der im Schutzrohr bzw. in der Flammhülse ein der Stabglühkerze (s.S.VII) entsprechendes Glührohr mit Regel- und Heizwendel angeordnet ist. Derartige Kerzen sind selbstregelnd, d.h., mit zunehmender Temperatur des Glührohres bzw. der Regelwendel vermindert sich die Stromaufnahme der durch die Regelwendel gesteuerten Heizwendel.

Beim Starten fließt Kraftstoff über das heiße Glührohr, entzündet sich und erwärmt die vorbeiströmende Ansaugluft. Auf diese Weise wird ein rasches Zünden aller Zylinder der Brennkraftmaschine erreicht. Als nachteilig hat sich jedoch erwiesen, daß bei hoher Luftgeschwindigkeit im Ansaugrohr die Flamme mitunter ausgeblasen wurde und somit Startschwierigkeiten sowie Rauchausstöße nicht zu vermeiden waren.

Der Erfindung liegt die Aufgabe zugrunde, an den vorerwähnten Flammglühkerzen Maßnahmen vorzusehen, die einen störungsfreien Betriebsablauf der Brennkraftmaschine während der Startphase auch bei hohem Luftdurchsatz, insbesondere bei Ladermotoren, sicherstellen.

Zur Lösung der Aufgabe dienen erfindungsgemäß die im Kennzeichen des Patentanspruchs angegebenen Merkmale.

Durch die besondere Ausbildung des unteren Teils der Flammglühkerze, bei der das verlängerte Glührohr mit zusätzlicher Regelwendel schutzrohrlos im Strömungsweg der Ansaugluft liegt, ergibt sich bei hohen Luftgeschwindigkeiten eine Abkühlung in diesem Bereich, die zur verstärkten Stromaufnahme der Heizwendel und somit zu einem Temperaturanstieg in der Entflammungszone führt. Die Folge ist, daß die Flamme auch bei hohem Luftdurchsatz nicht erlischt.

Aus der DE 33 09 133 A1 ist zwar im Glührohr eine in drei Abschnitte unterteilte Wendel bekannt, bei der aber lediglich eine Regelwendel vorgesehen ist, und zwar zwischen zwei Heizwendeln. Außerdem liegt das die drei Abschnitte enthaltende Glührohr ganz im Schutzrohr der Flammglühkerze.

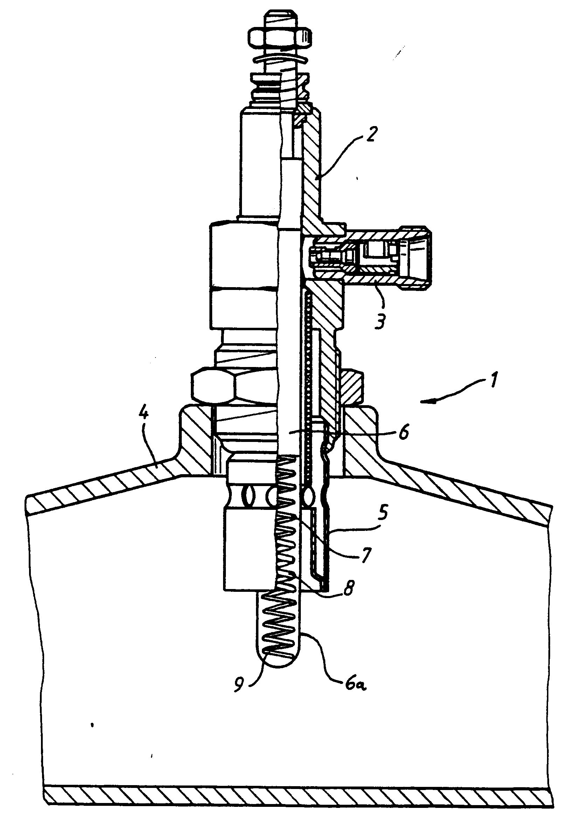

Ein Ausführungsbeispiel der Erfindung ist in der Zeichnung dargestellt, und zwar halbseitig in Ansicht und halbseitig im Längsschnitt, und im folgenden näher beschrieben.

Eine Flammglühkerze 1 für direkteinspritzende selbstzündende Brennkraftmaschinen besteht aus einem Kerzengehäuse 2 mit eingeschraubtem Dosiereinsatz 3 für die Kraftstoffzufuhr. Die Flammglühkerze 1 ist am Saugrohr 4 der Brennkraftmaschine befestigt und ragt mit ihrem mit dem Kerzengehäuse 2 verbundenen Schutzrohr 5 in das Saugrohr 4 so hinein, daß es im Strömungsweg der Ansaugluft liegt. Die Flammglühkerze 1 weist einen Glühstift bzw. ein Glührohr 6 mit integrierter erster Regelwendel 7, Heizwendel 8 und zweiter Regelwendel 9 auf. Das Glührohr 6 ist so ausgebildet, daß ein die zweite Regelwendel 9 tragender Rohrteil 6a aus dem Schutzrohr 5 herausragt und von der Ansaugluft erfaßt wird. Zwischen der ersten und zweiten Regelwendel 7, 9 differieren die Umgebungstemperaturen, da der die erste Regelwendel 7 tragende Abschnitt des Glührohres 6 durch das Schutzrohr 5 geschützt und der die zweite Regelwendel 9 tragende Rohrteil 6a des Glührohres ungeschützt im Strömungsweg der Ansaugluft liegt. Da die niedrigere Temperatur bei hohem Luftdurchsatz an der zweiten Regelwendel vorliegt, ist eine höhere Leistungsaufnahme der Heizwendel 8 dadurch gegeben, daß der Gesamtwiderstand des Glühstiftes abfällt und in der Entflammungszone höhere Temperaturen ermöglicht werden, die somit dem Verlöschen der Flamme entgegenwirken.

## Patentansprüche

1. Flammglühkerze für eine luftverdichtende Einspritzbrennkraftmaschine, insbesondere direkteinspritzende und ladedruckbeaufschlagbare Brennkraftmaschine, im wesentlichen bestehend aus einem Kerzengehäuse mit einem für die Kraftstoffzufuhr vorgesehenen Dosiereinsatz und mit einem in das Saugrohr der Brennkraftmaschine hineinragenden im Strömungsweg der Ansaugluft liegenden Schutzrohr, ferner aus einem Glührohr mit einer Regelwendel in Höhe der im Schutzrohr angeordneten Durchtrittsöffnungen sowie mit einer etwa bis zum freien Ende des Schutzrohres heranreichenden Heizwendel,
**dadurch gekennzeichnet,**
daß das Glührohr (6) ein verlängertes Rohrteil (6a) aufweist, das schutzrohrlos im Luftströmungsweg liegt und daß im verlängerten Rohrteil zusätzlich eine Regelwendel (9) angeordnet ist, die mit der Heizwendel (8) in Wirkverbindung steht.

## Claims

1. Flame-type heater plug for an air-compression fuel-injection internal-combustion engine, especially a direct-injection and superchargable internal-combustion engine, consisting essentially of a plug housing with a proportioning insert provided for the fuel supply and with a protective tube projecting into the suction pipe of the internal-combustion engine and located in the flow path of the intake air, and furthermore of a heater tube with a control coil level with the passage orifices arranged in the protective tube and with a heating coil extending approximately as far as the free end of the protective tube, characterised in that the heater tube (6) has a lengthened tube part (6a) which is arranged without protective tube in the air flow path, and in that arranged additionally in the lengthened tube part is a control coil (9) which is connected operatively to the heating coil (8).

## Revendications

1. Bougie de réchauffage à flamme pour un moteur à combustion interne à injection et compression d'air, en particulier pour moteur à injection directe et suralimenté, essentiellement constituée d'un corps de bougie avec un raccord de dosage prévu pour l'arrivée de carburant et avec un tube de protection dépassant dans le tube d'admission du moteur à combustion interne et placé sur le chemin de l'écoulement de l'air d'admission, également constituée d'un tube chauffant avec un filament de régulation au niveau des ouvertures de passage disposées dans le tube de protection ainsi qu'avec un filament chauffant qui va à peu près jusqu'à l'extrémité libre du tube de protection,
bougie caractérisée
par le fait que le tube chauffant (6) présente une partie tubulaire prolongée (6a) qui se trouve, sans tube de protection, sur le chemin de l'écoulement de l'air, et par le fait que dans la partie tubulaire prolongée est en outre disposé un filament de régulation (9) qui est en liaison positive avec le filament chauffant (8).
